# EUROPEAN PATENT APPLICATION

(11) **EP 1 482 729 A2**
(43) Date of publication of application: **01.12.2004**
(21) Application number: 04006982.5
(22) Date of filing: 23.03.2004
(51) Int. Cl.: H04N 5/782

(54) **Video recording and reproducing apparatus and video recording method**

(30) Priority: 30.05.2003 JP 2003155937
(71) Applicant: Kabushiki Kaisha Toshiba, Tokyo (JP)
(72) Inventor: Kamio, Hiroyuki Intellectual Property Division, Tokyoc105-8001 (JP)
(74) Representative: Henkel, Feiler & Hänzel

(57) **Abstract**

A video recording and reproducing apparatus (1) according to the present invention has a micro computer (113) that operates if two consecutive recording reservations are set in a timer computer (114), to process the two recording reservations by considering a period from the start of the earlier reserved recording to the end of the succeeding reserved recording to be a single recording operation. Thus, if temporally consecutive programs are recorded using a reserved recording function, recording is inhibited from being interrupted during the time required for recording initialization.

## Description

The present invention relates to a video recording and reproducing apparatus that can record and reproduce videos broadcast by a broadcasting satellite or a communication satellite or using an electric wave in a VHF band or a UHF band, and in particular, to a video recording and reproducing apparatus in conformity with a DVD-VR standard.

VTR (Video Tape Recorder) apparatuses using magnetic tapes as recording media are commonly used as video recording and reproducing apparatuses. In recent years, video recording and reproducing apparatuses have also been popular which use DVD-RAMs (Digital Versatile Disk-Random Access Memories, that is, optical disks in conformance with a DVD standard in and from which information can be recorded and reproduced and deleted at any time and which are called "RAM disks") or DVD-RWs (Digital Versatile Disk-Rewritables, that is, optical disks in conformance with the DVD standard in and from which information can be recorded and reproduced and deleted at any time and which are called "recording and reproducing disks").

Many video recording and reproducing apparatuses are provided with a timer recording function or a reserved recording function composed of a timer circuit or the like. Accordingly, even if a user is out, it is possible to record a program broadcast through a predetermined channel, at a time reserved and specified using a timer. Therefore, the user can view programs recorded on arbitrary days at arbitrary times.

Jpn. Pat. Appln. KOKAI Publication No. 6-36389 proposes an apparatus having a timer reservation information recording section. The timer reservation information recording section identifies a broadcasting signal state, for example, a multiplexed sound at a time when the timer is started. If the broadcasting signal state remains unchanged, the timer reservation information recording section determines that the preceding program has been extended and changes the reserved time of the target program so that recording starts after the broadcasting signal state changes.

With the above described video recording and reproducing apparatus, when recording is started by a reserved recording function, a power supply is turned on a predetermined time before a reserved start time for recording initialization required to switch a channel to be recorded and set a recording mode typified by image and sound quality on the basis of pre-inputted (preset) reservation information. That is, an amount of time is required before'the reserved recording start time in order to achieve the recording initialization.

Thus, if two temporally contiguous recording reservations are inputted (set), a short time zone during which no programs can be recorded occurs between the recording reservation set for an earlier time and the recording reservation set for a later time.

Accordingly, if the two programs reserved for recording each use all of its broadcasting time, then disadvantageously no programs can be recorded during the time required for the recording initialization, at the end of the earlier program reserved for recording or at the beginning of the later program reserved for recording.

This problem is not solved by the technique disclosed in Jpn. Pat. KOKAI Publication No. 6-36389 and is of course involved in this technique.

An aspect of the invention, there is provided to a video recording method comprising: receiving a video signal or an audio signal; encoding received the video signal or the audio signal into a predetermined form; and operating if two consecutive recording operations are set, to record the two recording operations so as to record a period from the start of the earlier first recording to the end of the succeeding second recording as one recording operation, and to record an identifier that can identify the first recording and the second recording to manage the end of the first'recording and the start of the second recording, in a predetermined area of the recording medium.

An aspect of the invention, there is provided to a video recording and reproducing apparatus comprising: a signal receiving section which converts a video signal or an audio signal; an encode section which encodes the signal received by the signal receiving section into a predetermined form; a recording device which records the encoded signal encoded by the encode section and a management information signal for the encoded signal, in a recording medium; a reproducing device which reproduces a video signal or an audio signal on the basis of the encoded signal and the management information signal for the encoded signal which are recorded in the recording medium; a recording reservation information retaining device which retains recording reservation information including a start and end of recording of the video or the audio signal as well as recording conditions in the recording medium which recording is executed by the recording device; and a recording control device which operates if a first and second pieces of recording reservation information in which a recording end time and a recording start time, respectively, that are consecutive are set, to start second recording based on the second piece of recording reservation information and including recording of an identifier that can identify the first recording and the second recording after first recording based on the first piece of recording reservation information has been ended.

An aspect of the invention, there is provided to a video recording and reproducing apparatus comprising: a signal receiving section which converts a video signal or an audio signal; an encode section which encodes the signal received by the signal receiving section into a predetermined form; a recording device which records the encoded signal encoded by the encode section and a management information signal for the encoded signal, in a recording medium; a recording medium managing device which controls recording of the management information signal and the encoded signal in the recording medium which recording is executed by the recording device; a reproducing device which reproduces a video or an audio signal on the basis of the encoded signal and the management information signal for the encoded signal which'are recorded in the recording medium; a recording reservation information retaining device which retains recording reservation information including a start and end of recording of the video or the audio signal as well as recording conditions in the recording medium which recording is executed by the recording device; and a recording control device which operates if a first and second pieces of recording reservation information in which a recording end time and a recording start time, respectively, that are consecutive are set, to start second recording based on the second piece of recording reservation information after first recording based on the first piece of recording reservation information has been ended, and to record an information signal indicative of the end of the first recording and the start of the succeeding second recording, in an information recording section of the management information signal recorded by the recording medium managing device in the recording medium.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram illustrating an example of the configuration of a video recording'and reproducing apparatus to which an embodiment of the present invention is applied;
FIG. 2 is a schematic diagram illustrating a DVD-VR standard required to record recording data utilized in the video recording and reproducing apparatus shown in FIG. 1;
FIG. 3 is a schematic diagram showing the relationship between M_VOBI and each of PGI, CI, and EPI in a file (VMG) described with reference to FIG. 2 and in which management information is recorded;
FIG. 4 is a schematic diagram illustrating the concept of a play list in the video recording and reproducing apparatus according to the present invention;
FIG. 5 is a conceptual drawing illustrating in detail the play list shown in FIG. 4;
FIG. 6 is a schematic diagram showing an example of display of a GUI screen that can be utilized for the video recording and reproducing apparatus described with reference to FIGS. 1 to 5;
FIG. 7 is a timing chart illustrating an example of operations of the video recording and reproducing apparatus performed if contiguous programs are reserved;
FIG. 8 is a flow chart illustrating an example of operations required for actual recording described with reference to FIG. 7; and
FIG. 9 is a flow chart illustrating an example of operations for a recording end process described with reference to FIG. 8 and performed when the reserved recording is extended.

With reference to the drawings, a detailed description will be given below of a video recording and reproducing apparatus that is an embodiment of the present invention.

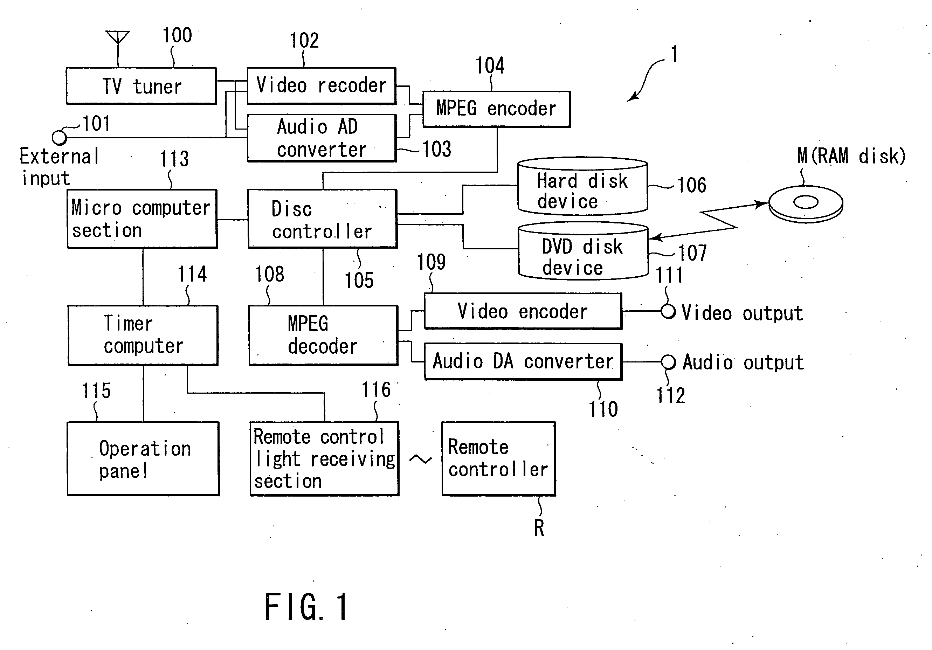

FIG. 1 is a block diagram illustrating an example of the configuration of a video recording and reproducing apparatus to which an embodiment of the present invention is applied.

In FIG. 1, a video recording and reproducing apparatus 1 has a TV tuner (signal receiving section) 100 that selectively receives space transmission (radio wave) or a broadcasting signal of a predetermined channel and an external input terminal (Ext.In, i.e., signal receiving section) 101 to which video signals 'and sound signals can be inputted. Externally inputted video and sound signals are inputted to a video decoder 102 and an audio A/D converter 103, respectively.

When a video and a sound are recorded, the video decoder 102 and the audio A/D converter 103 convert the video and sound signals, respectively, into digital signals. An MPEG encoder 104 then encodes (compresses) these digital signals into data in an MPEG form.

The compressed (encoded) video and sound signals are saved, via a disc controller 105, to a hard disk device (HDD) 106 or a DVD-RAM disk M pre-installed in a DVD drive device 107.

When a video and a sound are reproduced, MPEG signals (compressed signals) are read from the HDD 106 or the DVD-RAM disk M and then inputted to an MPEG decoder 108. The MPEG decoder 108 then decodes the MPEG signals to convert them into an analog video signal and an analog sound signal, respectively, via a video encoder 109 and an audio D/A converter 110.

The analog video and sound signals from the video encoder 109 and the audio D/A converter 110, respectively, are outputted to a video out terminal 111 and an audio out terminal 112, respectively.

Specifically, a video and a sound outputted by the video recording and reproducing apparatus 1 are reproduced by connecting, for example, a television receiver or a video display device (monitor device) and an audio amplifier which can reproduce videos and sounds, respectively, to the video out terminal 111 and the audio out terminal 112, respectively.

A micro computer 113 as a main control section controls individual circuits or units in the video decoder 102, MPEG encoder 104, disc controller 105, MPEG decoder 108, the video encoder 109, and others.

A video timer computer 114 is connected to the micro computer 113. The timer computer 114 turns on a main power supply at a preset time or a predetermined time before the preset time even if a main power supply circuit (not shown) of the video recording and reproducing apparatus 1 is off. The timer computer 114 thus causes each section of the main body of the apparatus 1 to stand by and get ready for recording before reserved recording is started. Thus, when the reserved time is reached, a program broadcast through a reserved channel, that is, associated videos and sounds, are recorded under preset recording conditions.

The timer computer 114 connects to a main body side operation panel 115 that enables inputting of operations of the video recording and reproducing apparatus 1, for example, recording start (REC), image reproduction (PLAY), (recording and reproduction) stop (STOP), and skip (SKIP), inputting of a time setting/reserved time (HOUR, MIN, DAY, MONTH), inputting of reservation conditions (RATE, MODE, HDD, DISK), inputting of a control signal corresponding to reset (COUNTER RESET) or the like, turning on/off of the main power supply, and the like.

Furthermore, the operation panel 115 connects to a remote controller receiving section 116 that accepts various control signals inputted by a remote controller R. Accordingly, control signals from the remote controller R which are similar to corresponding control signals inputted from the operation panel 115 can be inputted from a position located away from the apparatus 1 main body.

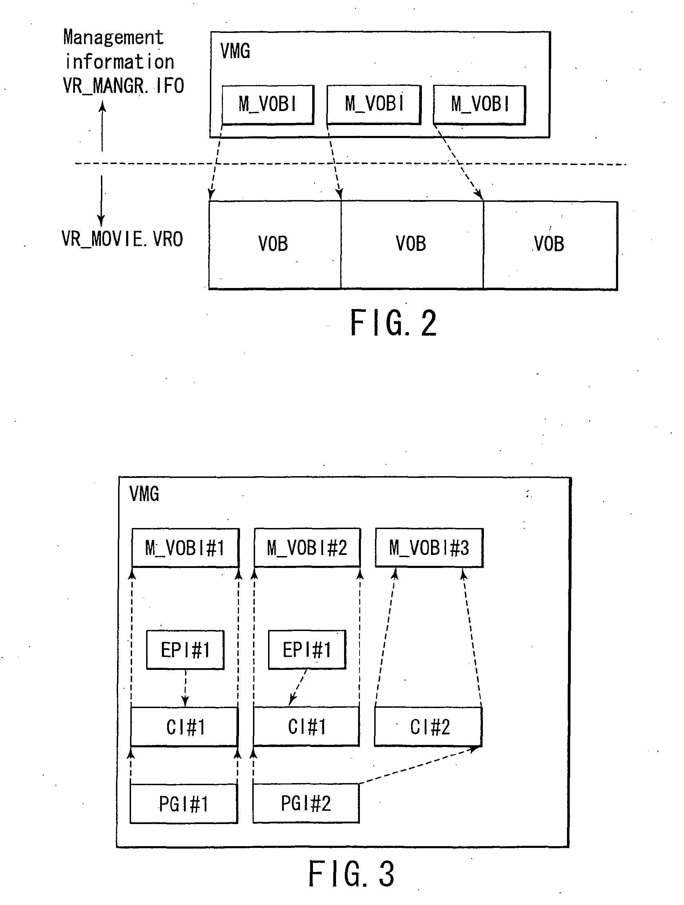

FIG. 2 is a schematic diagram illustrating a DVD-VR (DVD Video Recording) standard required to record recording data utilized in the video recording and reproducing apparatus shown in FIG. 1.

According to the DVD-VR standard, data is managed using a VRO file (VR_MOVIE. VRO) in which actual data for motion pictures is recorded and an IFO file (VR_MANGR. IFO) in which management information such as a recorded position of the data and title information is recorded (there is also a file for still images but its description is omitted in the present proposal).

Information on motion pictures and sounds is recorded in the VRO file using an MPEG2 program stream system. If a plurality of recording operations (recording of information) are performed, then after the first data has been recorded, the second data is recorded in the same file.

In this manner, a plurality of recording data are recorded in the same file. Accordingly, the IFO (information) file is provided to manage individual recording data. According to the DVD-VR standard, motion picture data created for a single recording operation is called M_VOB (Movie Video Object). The IFO file indicates where in the file each M_VOB is recorded. This area of the IFO file is called M_VOBI (Movie Video Object Information).

FIG. 3 is a schematic diagram showing the relationship between the M_VOBI and each of PGI, CI, and EPI in the VMG (a file in which the management information is recorded) described with reference to FIG. 2.

As shown in FIG. 3, the IFO file contains PGI (ProGram Information) required to indicate the M_VOB, which contains physical recording data, to a user in a "title" form.

The PGI includes plural pieces of CI (Cell Information). Each piece of CI includes an arbitrary reproduction start and end positions in the corresponding M_VOBI. That is, if for example, any frames are deleted from arbitrary M_VOBI resulting in a discontinuous file, the individual pieces of CI are beneficial in continuously reproducing information from the M_VOBI.

The CI includes an arbitrary number of pieces of EPI (Entry Point Information). The EPI indicates a position where reproduction is started. The operations are defined (mandatory) so that if a skip control signal is inputted during image reproduction using a "Skip Forward" key, the reproduction is continued from the first piece of EPI located behind the present reproduction position.

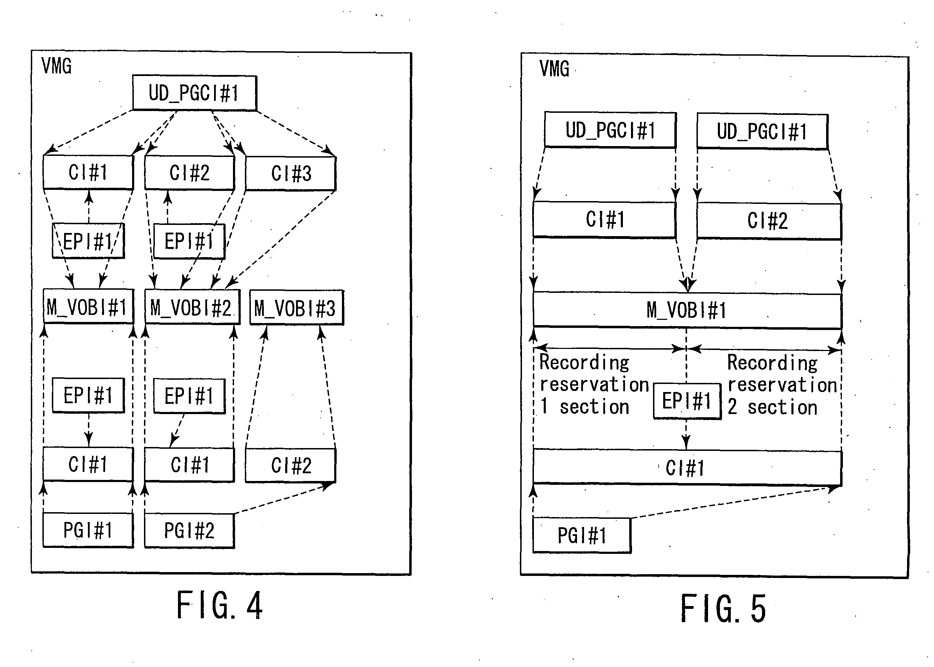

FIG. 4 is a schematic diagram illustrating the, concept of a play list.

The CI, included in the PCI, described with reference to FIG. 3, corresponds to the M_VOBI, physical recording data, on a one-to-one basis.

Thus, in the VMG described with reference to FIG. 3, for example, the M_VOBI#1, containing a single one-hour program, and the M_VOBI#2, containing two consecutive one-hour programs are not associated with two pieces of M_VOBI (there pieces of CI are not associated with two pieces of M_VOBI) .

In contrast, the play list (UD_PGCI) shown in FIG. 4 contains virtual titles that refer only to required sections in the M_VOBI.

Specifically, in FIG. 4, the CI included in any piece of the PGI shown below the three M_VOBs (M_VOB#1 to V_VOB#3) in the drawing corresponds to the M_VOBI on a one-to-one basis. However, the CI included in the UD_PGCI refers to a section of the M_VOBI.

For example, in FIG. 4, the area referred to by the CI#2 is smaller than the entire area of the M_VOB#3. However, the DVD-VR standard specifies that the area of an arbitrary M_VOBI which is not referred to by the corresponding CI has an upper limit value of 4GOP (for example, the GOP is 15 frames).

Therefore, by creating the UD_PGCI (play list) shown in FIG. 4, it is possible to refer to the first M_VOBI#1 using one cell (CI#1) and then refer to the second M_VOBI#2 using two cells (CI#2 and CI#3).

In this manner, CI referring only to a part of the M_VOBI can be compiled using a play list (UD_PGCI).

More specifically, as shown in FIG. 5, two-recording reservations (a recording reservation section 1 and a recording reservation section 2) are recorded in one piece of M_VOBI. Then, EPI#1 is provided (inserted) at the boundary position between the sections 1 and 2 and on the cell CI#1 side.

Two cells CI#1 and CI#2 referred to using one play list (UD_PGCI#1) are defied in association with the EPI#1.

When the play list (UD_PGCI#1) shown in FIG. 5 is created, even if one M_VOBI#1 contains two recording reservations and the user instructs on a skip to the second cell CI#2 (recording reservation section 2), reproduction can be started with the video recorded with the recording reservation 2 on the basis of the EPI#1.

Specifically; the user can obtain the UD_PGCI corresponding to the first recording reservation in the M_VOBI containing two consecutive one-hour programs and the UD_PCGI containing the second recording reservation, as well as the original M_VOBI (original title). In other words, a play list referring only to the respective reservation sections is created. This makes it possible to independently check the results of the first and second recording reservations (the results can be separately viewed).

Now, description will be given of the recording reserving function of the vide recording and reproducing apparatus described with reference to FIGS. 1 to 5.

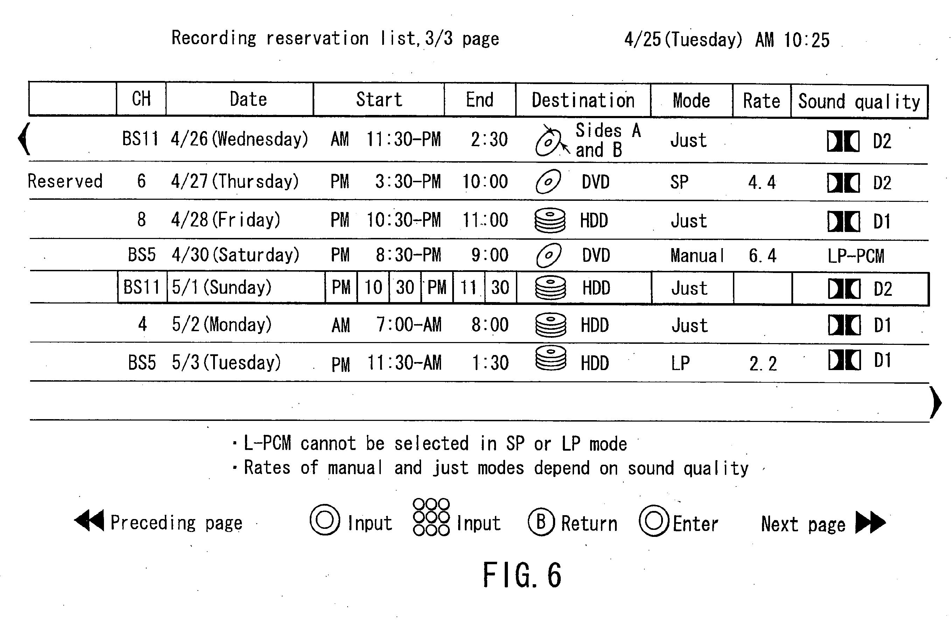

FIG. 6 is a schematic diagram showing an example of display of a GUI (Graphical User Interface) screen which is displayed on a television receiver or monitor device (display device) connected to the video recording and reproducing apparatus and which can be utilized to, for example, set recording reservations.

Information inputted to set a recording reservation includes, for example, a channel number, the date and time on and at which recording is to be started, the date and time on and at which recording is to be ended, image quality, and sound quality.

On the basis of the recording reservation set using the GUI, the main power supply to the video recording and reproducing apparatus 1 is turned on at the recording reservation start time managed by the timer computer 114 or a predetermined time before the recording reservation start time. Before the start of recording, for example, the channel is switched and the image and sound quality for recording is set. In this state, a standby state is maintained for a predetermined time before the start of the recording. The recording is ended at the recording end time. If there are no succeeding recording reservations, the timer computer 14 controllably turns off the main power supply after a predetermined time has passed.

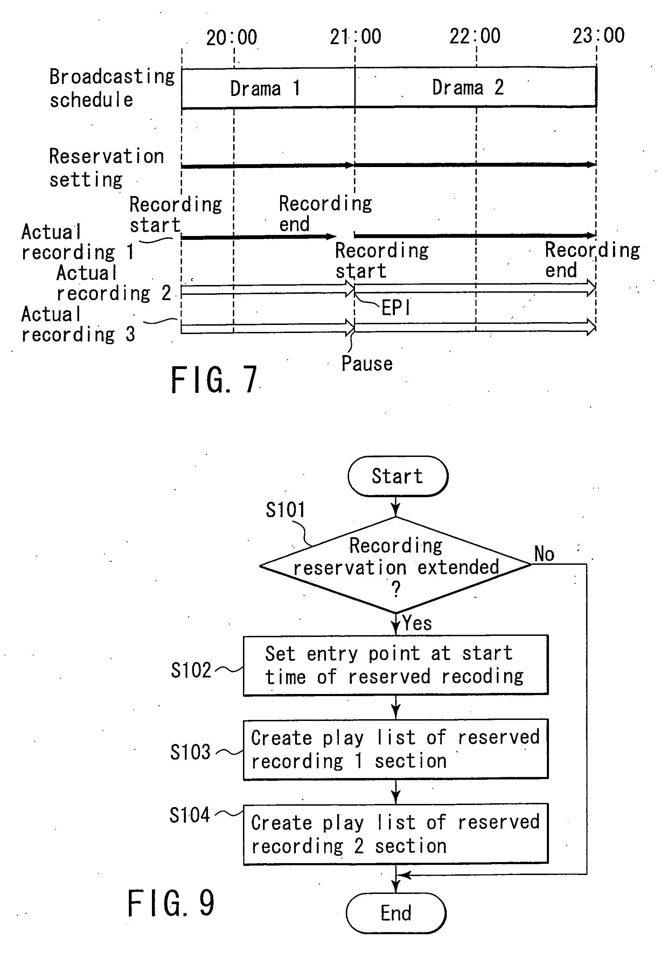

FIG. 7 is a timing chart illustrating an example of operations of the video recording and reproducing apparatus performed if contiguous programs are reserved.

For example, if a recording reservation 1 for a drama 1 is set for the time from 19:30 to 21:00 and a recording reservation 2 for a drama 2 is set for the time from 21:00 to 23:00, an operation for the actual recording 1 (an operation of a common recording and reproducing apparatus) starts the recording for the recording reservation 1 at 19:30:00 but ends it at 20:59:45.

Specifically, during 15 minutes before 21:00:00, when the reserved recording 2 is started, the channel is switched and the image and sound quality is set. Then, the recording for the recording reservation 2 is started just at 21:00.

However, with the operation for the recording 1, if the end of the reserved recording 1 contains a normal video, the corresponding video and sound are lost for at most 15 minutes.

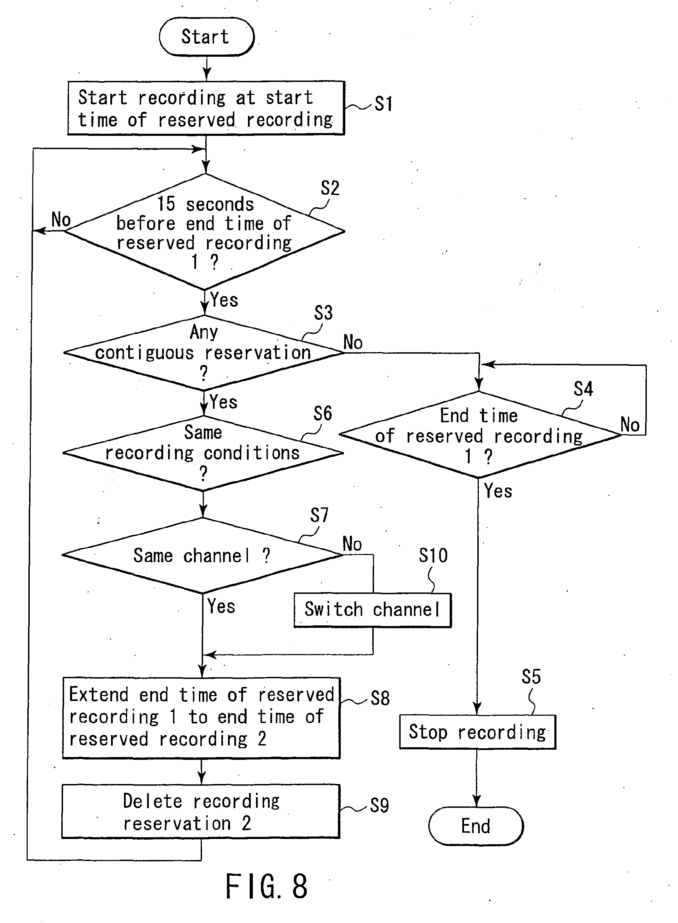

In contrast, using the operation for the actual recording 2 substantially prevents the video and sound from being interrupted. Thus, an otherwise one-hour reserved recording can be carried out so that a single two-hour program is recorded. In this case, as described later with reference to FIG. 8, the recording reservations 1 and 2 preferably have the same recording conditions, that is, the same image and sound quality, and also involve the same channel (the channel need not be switched).

In other words, the video and sound are substantially prevented from being interrupted by continuing the recording even after the end time of the reserved recording 1 without a stop and then stopping it at the end time of the reserved recording 2. In this case, the recording reserved as the recording reservation 2 is deleted by the timer computer 114.

Furthermore, by inserting the EPI#1 between the recording 1 and the recording 2 as previously described with reference to FIG. 5 and/or creating a play list (UD_PGCI#1), it is possible to start reproduction with images for the recording reservation 2 even if the user instructs on a skip to the recording 2.

On the other hand, if the recording reservations 1 and 2 have the same recording conditions, that is, the same image and sound quality, then even if they reserve different channels, the channel can be switched when the reserved recording 2 is executed after the reserved recording 1 as described in an operation for actual recording 3. That is, when the recording for the recording reservation 1 and the recording for the recording reservation 2 are executed on the basis of the two consecutive recording reservations, the earlier reserved recording must be stopped if the image and sound quality must be changed. Accordingly, if the recording for the recording reservation 1 and the recording for the recording reservation 2 have the same conditions except for the channel, continuous recording can be achieved by tolerating the disturbance of the image and sound which may occur when the channel is switched.

As shown in the actual recording 3 in FIG. 7, the time for which the video and sound are disturbed can be minimized by pausing the recording operation of the video recording and reproducing apparatus when the channel is switched between the recording for the recording reservation 1 and the recording for the recording reservation 2.

FIG. 8 is a flow chart illustrating an example of operations required to execute the actual recording 2 and actual recording 3, described with reference to FIG. 7.

As shown in FIG. 8, with the video recording and reproducing apparatus, recording is started in accordance with reservation information on the recording reservation 1 (S1).

Subsequently, it is checked whether or not the present time is a predetermined time, for example, 15 seconds before the end time of the reserved recording 1 (S2). Then, it is sensed that the present time is 15 seconds before the end time of the reserved recording 1, at which point (S2-Y) it is checked whether or not the next reservation information is temporally contiguous to the recording 1 (S3).

At step 53, if no contiguous reservations are set (S3-N), it is checked whether or not the reserved recording 1 is to be ended at the present time (S4). When the end time is reached (S4-Y), the recording is stopped (S5).

In contrast, if it is determined at step S3 that any contiguous reservation is set (S3-Y), it is checked whether or not the reservation has the same recording conditions.

At step S6, if the recording conditions for the recording reservation 1 are different from the recording conditions for the recording reservation 2 (S6-N), the recording is stopped when the end time of the reserved recording 1 is reached (S4, S4-Y, S5).

At step S6, if it is confirmed that the contiguous recording reservations have the same recording conditions (S6-Y), then it is checked whether or not the recording for the recording reservation 2 involves the same channel as that for the recording for the recording reservation 1 (S7).

At step S7, if it is sensed that the recording for the recording reservation 1 and the recording for the recording reservation 2 involve the same channel (S7-Y), the end time of the reserved recording 1 is extended to the end time of the reserved recording 2 (S8). Then, the information on the recording reservation 2 is deleted (S9).

At step S7, if it is sensed that the recording for the recording reservation 1 and the recording for the recording reservation 2 involve different channels (S7-N), the end time of the reserved recording 1 is extended to the end time of the reserved recording 2. Furthermore, the channel is switched (S10).

In this case, for example, the recording may be paused at the end time of the recording for the recording reservation 1. Then, the pause may be cleared when it is sensed that the channel is switched. The information on the recording reservation 2 is deleted in step S9.

Thus, it is assumed that the two temporally contiguous recording reservations, that is, the first recording reservation (recording reservation 1) and the second recording reservation (recording reservation 2), are set. Then, the two programs can be continuously recorded without interrupting the video or sound at the end of the recording for the recording reservation 1, by extending the end time of the reserved recording 1 to the end time of'the reserved recording 2, that is, rewriting the end time of the reserved recording 1 so that it changes to the end time of the reserved recording 2.

In the description of the above example, at step S10, the recording for the recording reservation 2 is executed after the recording for the recording reservation 1, and the channel is switched at the end time of the reserved recording 1. However, of course, the recording may be stopped at the end time of the reserved recording 1.

FIG. 9 is a flow chart illustrating an example of operations for the recording end process described with reference to FIG. 8 and performed when the reserved recording is extended.

With the recording reservation extending process shown in FIG. 8, the recording for the two contiguous recording reservations, that is, the recording for the first recording reservation 1 and the recording for the second recording reservation 2, is stored in the HDD or DVD-RAM disk M as a substantially single recording operation. In this case, for an easy determination as to where the recording based on the recording reservation 2 starts, the EPI (entry point) is inserted at the position of the start time of the recording for the recording reservation 2 (S102) if a recording reservation extending process has been executed, as previously described with reference to FIG. 5.

Subsequently, a play list (UD_PGCI#1) for the recording section for the recording reservation 1 is created (S103). Moreover, a play list (UD_PGCI#1) for the recording section for the recording reservation 2 is created (S104).

Specifically, if a recording reservation extending process has been executed, the EPI, previously described with reference to FIG. 5, is inserted between the end time of the recording for the recording reservation 1 and the start time of the recording for the recording reservation 2. Then, a play list is created for each of the recording reservations preceding and succeeding the EPI. Then, even if the user instructs on a skip to the recording reservation 2, reproduction can be started with the video recorded on the basis of the recording reservation 2.

The present invention is not limited to the above described embodiment. Arbitrary variations or changes may be made to the above embodiment without departing the spirits of the present invention. For example, in the above description of the embodiment, videos and sounds are recorded. However, it should be appreciated that equivalent operations and effects can be achieved even if only sounds are recorded. Furthermore, in the above description of the embodiment, the video recording and reproducing apparatus uses an optical disk (RAM disk) or hard disk as a recording medium. However, it should be appreciated that equivalent operations and effects can be achieved using, for example, a conventional VTR provided that the VTR has equivalent characteristics.

As described above, the present invention avoids the situation in which when temporally consecutive programs are recorded using a reserved recording function, no programs are recorded during the time required for recording initialization.

Furthermore, according to the present invention, if the video recording and reproducing apparatus determines that reservation information on a plurality of recording reservations set by the user indicates contiguous times and the same channel, the earlier recording is continued to the end time of the next reservation without a stop. This prevents a failure to execute recording in a certain section in the middle of the contiguous reserved recording operations.

The present invention is not limited to the embodiments described above and can be modified in various manners without departing from the spirit and scope of the invention.

## Claims

1. A video recording method **characterized by** comprising:
receiving a video signal or an audio signal;
encoding received the video signal or the audio signal into a predetermined form; and
operating if two consecutive recording operations are set, to record the two recording operations so as to record a period from the start of the earlier first recording to the end of the succeeding second recording as one recording operation, and to record an identifier that can identify the first recording and the second recording to manage the end of the first recording and the start of the second recording, in a predetermined area of the recording medium.

2. A video recording method according to claim 1, **characterized in that**
in the recording, if two consecutive recording operations are set in the reservation information, the recording when a first recording is ended, and starting a second recording with an identifier that can identify the first recording and the second recording.

3. A video recording method according to claim 1, **characterized in that**
the identifier is an entry point indicative of a position of a start time of the second recording for titles consecutively recorded from a period from the start time of the first recording and the end time of the second recording.

4. A video recording method according to claim 1, **characterized in that**
the identifier includes the management information signal and encoded signal for identifying the first recording and the second recording, and recorded on a predetermined area in the recording medium.

5. A video recording method according to claim 1,
**characterized in that**
when recording the received and encoded signal in the recording medium together with the identifier, retaining the signal and information using reservation information for retaining a start and end of recording in the recording medium executed by the recording means as well as recording conditions.

6. A video recording method according to claim 5, **characterized in that**
if two consecutive recording operations are set, the file management information to be recorded in a predetermined area of the recording medium for,each recording.

7. A video recording method according to claim 5, **characterized in that**
the file management information includes at least one of a recording start position information and recording end position information.

8. A video recording method according to claim 5, **characterized in that**
the file management information includes virtual positional information referring only to a required to be recorded in a predetermined area of the recording medium for each recording.

9. A video recording method according to claim 5, **characterized in that**
if recording has been executed for a period contained in the reservation information of the second recording since the start time contained in the reservation information for the first recording, then after the recording, a first play list referring to a reservation section for the first recording and a second play list referring to a reservation section for the second recording are created.

10. A video recording method according to claim 5, **characterized in that**
operating if two consecutive recording operations are set, to start the second recording after the first recording has been ended, while recording an identifier that can identify the earlier first recording and the succeeding second recording, so that the two recording operations maintain the same recording conditions and operations for the conditions.

11. A video recording method according to claim 10, **characterized in that**
operating if two consecutive recording operations are set, to start the second recording after the first recording has been ended, while maintaining the recording means in a recording state.

12. A video recording method according to claim 5, **characterized in that**
operating if the two recording operations have the same recording conditions, to start a second recording after a first recording has been ended, while recording an identifier that can identify the first recording and the second recording, in a predetermined recording position.

13. A video recording method according to claim 5, **characterized in that**
in the recording, if two consecutive recording operations are set in the reservation information, comparing the recording conditions for the two recording operations, and if of the recording channel conditions for the signal each receive differs between the two recording operations each other, pausing the recording when the earlier recording is ended, and starting the second reading after recording an identifier that can identify the earlier recording and the succeeding second recording.

14. A video recording and reproducing apparatus (1) **characterized by** comprising:
a signal receiving section (100, 101) which converts a video signal or an audio signal;
an encode section (104) which encodes the signal received by the signal receiving section into a predetermined form;
a recording device (105, 106, 107) which records the encoded signal encoded by the encode section and a management information signal for the encoded signal, in a recording medium;
a reproducing device (108) which reproduces a video signal or an audio signal on the basis of the encoded signal and the management information signal for the encoded signal which are recorded in the recording medium;
a recording reservation information retaining device (114) which retains recording reservation information including a start and end of recording of the video or the audio signal as well as recording conditions in the recording medium which recording is executed by the recording device; and
a recording control device (105, 113) which operates if a first and second pieces of recording reservation information in which a recording end time and a recording start time, respectively, that are consecutive are set, to start second recording based on the second piece of recording reservation information and including recording of an identifier that can identify the first recording and the second recording after first recording based on the first piece of recording reservation information has been ended.

15. A video recording and reproducing apparatus according to claim 14, **characterized in that**
the identifier is an entry point indicative of a position of a start time of the second recording for titles consecutively recorded from a period from the start time of the first recording and the end time of the second recording.

16. A video recording and reproducing apparatus according to claim 14, **characterized in that**
the identifier includes the management information signal and encoded signal for identifying the first recording and the second recording, and recorded on a predetermined area in the recording medium.

17. A video recording and reproducing apparatus (1) **characterized by** comprising:
a signal receiving section (100, 101) which converts a video signal or an audio signal;
an encode section (104) which encodes the signal received by the signal receiving section into a predetermined form;
a recording device (106, 107) which records the encoded signal encoded by the encode section and a management information signal for the encoded signal, in a recording medium;
a recording medium managing device (105) which controls recording of the management information signal and the encoded signal in the recording medium which recording is executed by the recording device;
a reproducing device (108) which reproduces a video or an audio signal on the basis of the encoded signal and the management information signal for the encoded signal which are recorded in the recording medium;
a recording reservation information retaining device (114) which retains recording reservation information including a start and end of recording of the video or the audio signal as well as recording conditions in the recording medium which recording is executed by the recording device; and
a recording control device (105, 113) which operates if a first and second pieces of recording reservation information in which a recording end time and a recording start time, respectively, that are consecutive are set, to start second recording based on the second piece of recording reservation information after first recording based on the first piece of recording reservation information has been ended, and to record an information signal indicative of the end of the first recording and the start of the succeeding second recording, in an information recording section of the management information signal recorded by the recording medium managing device in the recording medium.

18. A video recording and reproducing apparatus according to claim 17, **characterized in that**
the recording control device operating if two consecutive recording operations are set in the reservation information retaining means, to record the two recording operations so as to record a period from the start of the earlier first recording to the end of the succeeding second recording as one recording operation, and to record an identifier that can identify the first recording and the second recording to manage the end of the first recording and the start of the second recording, in a predetermined area of the recording medium through the recording medium control means.

19. A video recording and reproducing apparatus according to claim 17, **characterized in that**
the recording control device operating if two consecutive recording operations are set in the reservation information retaining means, to start the second recording after the first recording has been ended, while recording an identifier that can identify the earlier first recording and the succeeding second recording, so that the two recording operations maintain the same recording conditions and operations for the conditions.

20. A video recording and reproducing apparatus according to claim 17, **characterized in that**
the recording control device operating when in the recording, if two consecutive recording operations are set in the reservation information, comparing the recording conditions for the two recording operations, and if of the recording channel conditions for the signal each receive differs between the two recording operations each other, pausing the recording when the earlier recording is ended, and starting the second reading after recording an identifier that can identify the earlier recording and the succeeding second recording.
